# EUROPEAN PATENT APPLICATION

(11) **EP 4 803 776 A1**
(43) Veröffentlichungstag der Anmeldung: **09.09.2026**
(21) Anmeldenummer: 23957235.7
(22) Anmeldetag: 02.11.2023
(51) Int. Cl.: F16F 15/121, F16F 15/124, F16F 15/126, F16F 15/12, F16F 15/10, F16F 15/14, F16F 15/00, F16D 3/12

(54) **SCHWINGUNGSDÄMPFER**

(71) Anmelder: Schaeffler Technologies AG & Co. KG, 91074 Herzogenaurach (DE)
(72) Erfinder: JI, Miaomiao, Shanghai 201804 (CN); ZHEN, Zhen, Shanghai 201804 (CN); XIA, Tianlei, Shanghai 201804 (CN)
(86) Internationale Anmeldenummer: PCT/CN2023/129244
(87) Internationale Veröffentlichungsnummer: WO 2025/091362

(57) **Zusammenfassung**

Die vorliegende Erfindung betrifft einen Schwingungsdampfer. Der Schwingungsdämpfer umfasst einen Speichenfedertilger, wobei der Speichenfedertilger einen Mittelteil, mehrere Speichenfedern und einen Außenringteil umfasst, wobei der Außenringteil radial außen den Mittelteil koaxial umgibt, wobei die mehreren Speichenfedern jeweils in radialer Richtung zwischen dem Außenringteil und dem Mittelteil damit verbunden angeordnet und in Umfangsrichtung voneinander beabstandet verteilt sind, wobei sich die mehreren Speichenfedern elastisch verformen können und dadurch eine Drehung des Außenringteils relativ zu dem Mittelteil zulassen. Dabei umfasst der Schwingungsdampfer ferner eine Deckplatte, wobei die Deckplatte an der axialen Seite des Mittelteils fixiert ist und relativ drehbar direkt oder indirekt an dem Außenringteil anliegt, sodass bei der Drehung des Außenringteils relativ zu dem Mittelteil die Deckplatte mit dem Außenringteil in direkten oder indirekten Reibungskontakt kommen kann. Der Schwingungsdampfer der vorliegenden Erfindung weist eine verbesserte Dämpfungswirkung auf.

## Beschreibung

Die vorliegende Erfindung bezieht sich auf das technische Gebiet von Fahrzeugen. Konkret betrifft die vorliegende Erfindung einen Schwingungsdämpfer für einen Antriebsstrang eines Kraftfahrzeugs.

In herkömmlichen Kraftstofffahrzeugen oder Hybridfahrzeugen wird die Kurbelwelle einer Brennkraftmaschine häufig von Drehmomentschwingungen beeinflusst. Die Drehmomentschwingungen der Kurbelwelle können zu Schäden an der Kurbelwelle und zu NVH (Noise, Vibration, Harshness)-Problemen führen. Die aktuelle konventionelle Lösung für diese Probleme stellt die Anordnung eines Gummischwingungsdämpfers (TVD) dar. Der TVD-Schwingungsdämpfer nutzt vor allem die durch die Drehung des Außenrings mit einem größeren Trägheitsmoment relativ zu dem elastischen Gummielement erzeugte Reibung zur Energieaufnahme der Torsionsschwingungen und verringert dadurch die Torsionsamplitude der Kurbelwelle und vermeidet somit Resonanzen im üblichen Drehzahlbereich. Allerdings ist es bei diesem Schwingungsdämpfer aufgrund des begrenzten Einbauraums oftmals schwierig, eine ausreichende Dämpfungswirkung für die Torsionsschwingungen der Kurbelwelle bereitzustellen, und das Gummi altert leicht unter der Einwirkung der durch die Reibung erzeugten Wärme, was somit die Lebensdauer beeinträchtigt.

CN 115182963 A schlägt einen neuartigen Speichenfeder-Schwingungsdämpfer vor. Dieser Speichenfeder-Schwingungsdämpfer umfasst mehrere Speichenfedertilger, wobei diese Speichenfedertilger jeweils unterschiedliche radiale Abmessungen besitzen und somit eine Frequenz mehrerer Ordnungen zum Puffern der Drehmomentschwingungen der Kurbelwelle bereitstellen können. Aufgrund der unterschiedlichen Formen und Abmessungen der verschiedenen Speichenfedertilger erfordert dieser Schwingungsdämpfer komplexere Bearbeitungsprozesse und höhere Fertigungskosten. Außerdem hängt die durch diesen Schwingungsdämpfer bereitgestellte Dämpfungsgröße lediglich von den jeweiligen Formen der Speichenfedertilger und der Reibung dazwischen ab und der fertige Schwingungsdämpfer kann nicht je nach Bedarf die Dämpfung flexibel anpassen.

Die durch die vorliegende Erfindung zu lösende technische Aufgabe ist somit die Bereitstellung eines verbesserten Schwingungsdämpfers.

Die obige technische Aufgabe wird durch einen erfindungsgemäßen Schwingungsdämpfer gelöst. Der Schwingungsdämpfer umfasst einen Speichenfedertilger, wobei der Speichenfedertilger einen Mittelteil, mehrere Speichenfedern und einen Außenringteil umfasst, wobei der Außenringteil radial außen den Mittelteil koaxial umgibt, wobei die mehreren Speichenfedern jeweils in radialer Richtung zwischen dem Außenringteil und dem Mittelteil damit verbunden angeordnet und in Umfangsrichtung voneinander beabstandet verteilt sind, wobei sich die mehreren Speichenfedern elastisch verformen können und dadurch eine Drehung des Außenringteils relativ zu dem Mittelteil zulassen. Dabei umfasst der Schwingungsdämpfer ferner eine Deckplatte, wobei die Deckplatte an der axialen Seite des Mittelteils fixiert ist und relativ drehbar direkt oder indirekt an dem Außenringteil anliegt, sodass bei der Drehung des Außenringteils relativ zu dem Mittelteil die Deckplatte mit dem Außenringteil in direkten oder indirekten Reibungskontakt kommen kann. Bei Drehmomentschwingungen drehen die Speichenfedern durch elastische Verformung den Außenringteil gewissermaßen relativ zu dem Mittelteil, wodurch die Drehmomentschwingungen gepuffert werden; da nun die Deckplatte relativ zum Mittelteil fixiert ist und auch der Außenringteil relativ zur Deckplatte gedreht wird, wird dadurch eine relative Gleitbewegung zwischen der Deckplatte und dem Außenringteil erzeugt, wodurch eine zusätzliche Reibungsdämpfung für den Schwingungsdämpfer bereitgestellt wird. Darüber hinaus kann die Deckplatte auf einer axialen Seite des Speichenfedertilgers ferner eine axiale Einschränkung für den Außenringteil bereitstellen, wodurch die Speichenfedern veranlasst werden, sich in einer vorbestimmten Weise im Wesentlichen in einer Ebene senkrecht zur axialen Richtung elastisch zu verformen.

Gemäß einer vorzugsweisen Ausführungsform der vorliegenden Erfindung kann der Schwingungsdämpfer ferner eine Membranfeder umfassen, wobei die Membranfeder zwischen der Deckplatte und dem Außenringteil daran anliegend angeordnet ist und relativ drehbar an mindestens einer der beiden Komponenten Deckplatte und Außenringteil anliegt. Die Deckplatte stößt dadurch über die Membranfeder indirekt an den Außenringteil an, und die elastisch komprimierte Membranfeder übt durch eine federnde Kraft eine Anpresskraft auf die Kontaktfläche aus, wodurch sichergestellt wird, dass an der Kontaktfläche eine ausreichende Reibungskraft erzeugt werden kann.

Gemäß einer weiteren vorzugsweisen Ausführungsform der vorliegenden Erfindung kann die Membranfeder fest mit einer der beiden Komponenten Deckplatte und Außenringteil verbunden sein und relativ drehbar mit der anderen in Kontakt kommen. Dies erleichtert dadurch die Montage und die Positionierung der Membranfeder im Schwingungsdämpfer.

Gemäß einer weiteren vorzugsweisen Ausführungsform der vorliegenden Erfindung kann die Membranfeder fest mit dem Außenringteil verbunden sein und relativ drehbar mit der Deckplatte in Kontakt kommen. Die feste Verbindung der Membranfeder mit dem Außenringteil ist einfach zu realisieren.

Gemäß einer weiteren vorzugsweisen Ausführungsform der vorliegenden Erfindung kann der Schwingungsdämpfer ferner einen Reibungsbelag umfassen, wobei die Membranfeder über den Reibungsbelag mit der Deckplatte in indirekten Kontakt kommt. Der Reibungsbelag kann ein gutes Verschleißverhalten aufweisen, wodurch der Verschleiß der Deckplatte und der Membranfeder bei der gleichzeitigen Bereitstellung einer ausreichenden Reibungskraft verringert wird und auch durch die Stahl-Stahl-Reibung entstehende Geräusche vermieden werden können.

Gemäß einer weiteren vorzugsweisen Ausführungsform der vorliegenden Erfindung kann der Reibungsbelag einen axialen Abschnitt und einen radialen Abschnitt umfassen, wobei der axiale Abschnitt an der radiale Außenseite der Deckplatte anliegt, und der radiale Abschnitt sich ausgehend vom axialen Ende des axialen Abschnitts in radialer Richtung nach innen erstreckt und an einer dem Speichenfedertilger zugewandte Seitenfläche der Deckplatte anliegt. Der Reibungsbelag weist dadurch einen L-förmigen Querschnitt auf und kann durch Formschluss am äußeren Umfang der Deckplatte positioniert werden.

Gemäß einer weiteren vorzugsweisen Ausführungsform der vorliegenden Erfindung kann der Schwingungsdämpfer ferner ein oder mehrere erste Befestigungselemente umfassen, wobei jedes erste Befestigungselement in axialer Richtung durch die Deckplatte und den Mittelteil hindurchgeht und dadurch die Deckplatte und den Mittelteil miteinander sichert; und/oder der Schwingungsdämpfer kann ferner ein oder mehrere zweite Befestigungselemente umfassen, wobei jedes zweite Befestigungselement in axialer Richtung durch die Membranfeder und den Außenringteil hindurchgeht und dadurch die Membranfeder und den Außenringteil miteinander sichert. Derartige Befestigungselemente können Bolzen, Schrauben oder Nieten und dergleichen sein.

Gemäß einer weiteren vorzugsweisen Ausführungsform der vorliegenden Erfindung kann die Deckplatte aus einem elastischen Material hergestellt sein, sodass die Deckplatte durch elastische Verformung den Außenrand an den Außenringteil anpresst. Die Deckplatte kann durch elastische Verformung eine Anpresskraft auf die Kontaktflächen bereitstellen, wodurch sichergestellt wird, dass eine ausreichende Reibungskraft zwischen den Kontaktflächen erzeugt werden kann.

Gemäß einer weiteren vorzugsweisen Ausführungsform der vorliegenden Erfindung kann die Deckplatte einen radialen Innenabschnitt, einen Wölbungsabschnitt und einen Randabschnitt umfassen, wobei der radiale Innenabschnitt an dem Mittelteil fixiert ist, der Randabschnitt radial außen den radialen Innenabschnitt koaxial umgibt, und der Wölbungsabschnitt zwischen dem radialen Innenabschnitt und dem Randabschnitt damit verbunden angeordnet und von dem Speichenfedertilger weg gewölbt ist, sodass der Randabschnitt an den Außenringteil angepresst ist. Die Deckplatte kann durch den Wölbungsabschnitt eine elastische Verformung erzeugen.

Gemäß einer weiteren vorzugsweisen Ausführungsform der vorliegenden Erfindung kann die Deckplatte ein oder mehrere durchgehende Fensterlöcher zum Ableiten von Verschmutzungen umfassen. Die Fenster können an einem mit dem Speichenfedertilger kontaktfreien Abschnitt der Deckplatte gebildet sein, und Verschmutzungen auf dem Speichenfedertilger können unter Fliehkrafteinwirkung über die Fensterlöcher aus dem Schwingungsdämpfer abgeleitet werden.

Gemäß einer weiteren vorzugsweisen Ausführungsform der vorliegenden Erfindung kann der Schwingungsdämpfer zwei Deckplatten umfassen, wobei sich die zwei Deckplatten jeweils auf eienr axialen Seite des Speichenfedertilgers befinden und jeweils relativ drehbar direkt oder indirekt an dem Außenringteil anliegen. Die zwei Deckplatten können gegenüberliegend auf beiden axialen Seiten des Speichenfedertilgers Druck ausüben, wodurch das Risiko einer Verformung des Speichenfedertilgers zu einer axialen Seite hin verringert wird.

Die vorliegende Erfindung wird nachstehend im Zusammenhang mit den beigefügten Zeichnungen näher beschrieben. In den Figuren sind funktionsgleiche Elemente mit den gleichen Bezugszeichen bezeichnet. In den Figuren:
Figur 1 zeigt eine perspektivische Ansicht eines Schwingungsdämpfers gemäß einer beispielhaften Ausführungsform der vorliegenden Erfindung;
Figur 2 zeigt eine perspektivische Ansicht des in Figur 1 gezeigten Schwingungsdämpfers;
Figur 3 zeigt eine Schnittansicht des in Figur 1 gezeigten Schwingungsdämpfers;
Figur 4 zeigt eine perspektivische Ansicht des Schwingungsdämpfers gemäß einer weiteren beispielhaften Ausführungsform der vorliegenden Erfindung;
Figur 5 zeigt eine perspektivische Ansicht des Schwingungsdämpfers gemäß einer weiteren beispielhaften Ausführungsform der vorliegenden Erfindung; und
Figur 6 zeigt eine Schnittansicht des in Figur 5 gezeigten Schwingungsdämpfers.

Spezifische Ausführungsformen eines erfindungsgemäßen Schwingungsdämpfers werden nachstehend im Zusammenhang mit den beigefügten Zeichnungen beschrieben. Die folgende ausführliche Beschreibung und die beigefügten Zeichnungen werden verwendet, um die Prinzipien der vorliegenden Erfindung beispielhaft zu verdeutlichen, wobei die vorliegende Erfindung nicht auf die beschriebenen vorzugsweisen Ausführungsformen beschränkt wird und der Schutzumfang der vorliegenden Erfindung durch die Ansprüche definiert wird.

Gemäß den Ausführungsformen der vorliegenden Erfindung wird ein Schwingungsdämpfer für einen Antriebsstrang eines Kraftfahrzeugs bereitgestellt. Dieser Schwingungsdämpfer ist insbesondere zur Montage an der Kurbelwelle einer Brennkraftmaschine vorgesehen, um Drehmomentschwingungen der Kurbelwelle zu puffern. Dieser Schwingungsdämpfer kann ausgehend von Speichenfedern und einer zusätzlichen Reibungsdämpfung eine puffernde und schwingungsdämpfende Wirkung bereitstellen.

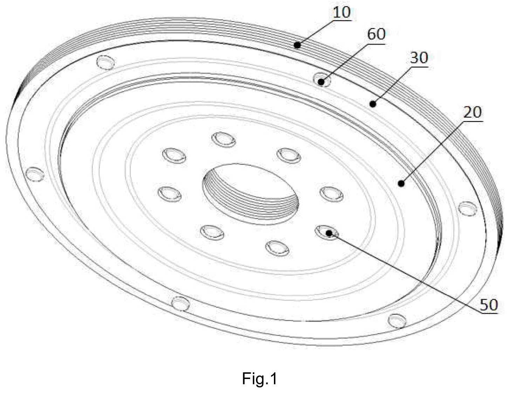

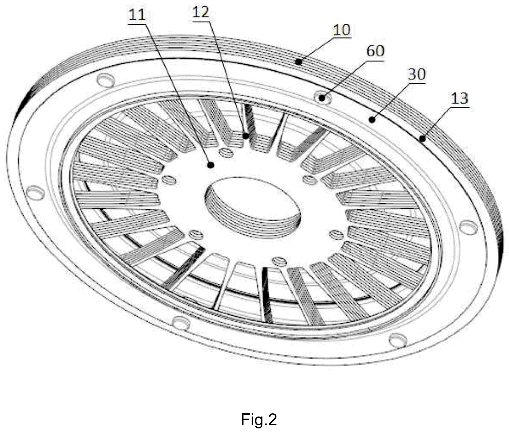

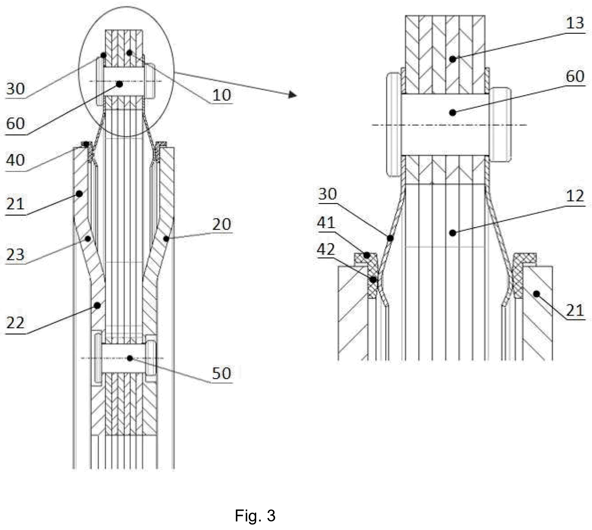

Im Folgenden wird die spezifische Konstruktion des erfindungsgemäßen Schwingungsdämpfers im Zusammenhang mit den in den Figuren 1 bis 3 gezeigten beispielhaften Ausführungsformen verdeutlicht. Dabei zeigen die Figuren 1 und 2 eine perspektivische Ansicht eines Schwingungsdämpfers gemäß einer beispielhaften Ausführungsform der vorliegenden Erfindung, während Figur 3 eine Schnittansicht eines Schnitts des Schwingungsdämpfers durch eine Mittelachse zeigt.

Wie in Figur 1 gezeigt, ist der Schwingungsdämpfer insgesamt im Wesentlichen kreisscheibenförmig ausgebildet. Wie in Figur 3 gezeigt, umfasst der Schwingungsdämpfer in dieser Ausführungsform vor allem einen Speichenfedertilger 10, eine Deckplatte 20 und eine Membranfeder 30. In der perspektivischen Ansicht der Figur 2 wird die Deckplatte 20 aus Figur 1 entfernt, um die Konstruktion des Speichenfedertilgers 10 deutlicher zu zeigen.

Der Speichenfedertilger 10 kann eine integral gebildete Komponente oder ein Ganzes aus einer Konstruktion mehrerer Schichten sein, die laminiert miteinander gesichert sind. Wie in Figur 2 gezeigt, umfasst der Speichenfedertilger 10 einen Mittelteil 11, mehrere Speichenfedern 12 und einen Außenringteil 13. Der Speichenfedertilger 10 weist eine Mittelachse parallel zur Längsrichtung auf. Der Mittelteil 11 ist eine kreisringförmige und plattenförmige Komponente, die um die Längsmittelachse herum gebildet ist. Der Außenringteil 13 umgibt koaxial radial außen den Mittelteil 11 und ist in radialer Richtung von dem Mittelteil 11 beabstandet. Jede Speichenfeder 12 erstreckt sich im Wesentlichen in radialer Richtung zwischen dem Außenringteil 13 und dem Mittelteil 11 und der Außenringteil 13 ist somit mit dem Mittelteil 11 als Ganzes verbunden. Die mehreren Speichenfedern 12 des Speichenfedertilgers 10 sind in Umfangsrichtung voneinander beabstandet, vorzugsweise in Umfangsrichtung gleichmäßig, verteilt und jede Speichenfeder 12 kann vorzugsweise eine im Wesentlichen gleiche Form und Abmessung aufweisen. Der Speichenfedertilger 10 ist drehfest mit der Kurbelwelle der Brennkraftmaschine verbunden und kann sich dadurch mit der Kurbelwelle der Brennkraftmaschine um die Mittelachse des Speichenfedertilgers 10 drehen. Diese Speichenfedern 12 des Speichenfedertilgers 10 sind aus einem elastischen Material hergestellt, sodass bei Drehmomentschwingungen am Speichenfedertilger 10 diese Speichenfedern 12 sich elastisch verformen können, was somit eine Drehung des Außenringteils 13 in einem bestimmten Bereich (abhängig von der Größe des Drehmoments und der elastischen Verformungskapazität der Speichenfedern 12) relativ zu dem Mittelteil 11 um die Mittelachse zulässt, wodurch die Drehmomentschwingungen gepuffert werden.

Wie in Figur 3 gezeigt, umfasst der Schwingungsdämpfer eine oder zwei Deckplatten 20. Jede Deckplatte 20 ist eine um die Mittelachse herum gebildete, etwa kreisscheibenförmige Komponente, die koaxial auf einer axialen Seite des Speichenfedertilgers 10 montiert und an die entsprechende axiale Seite des Mittelteils 11 fixiert ist. Die feste Verbindung der Deckplatte 20 mit dem Mittelteil 11 kann beispielsweise durch ein oder mehrere erste Befestigungselemente 50 (z. B. Nieten, Schrauben oder Bolzen) ermöglicht werden, wobei diese ersten Befestigungselemente 50 in Umfangsrichtung voneinander beabstandet, insbesondere gleichmäßig voneinander beabstandet, angeordnet sein können. Jedes erste Befestigungselement 50 geht in axialer Richtung durch die Deckplatte 20 und den Mittelteil 11 hindurch und sichert dadurch die Deckplatte 20 und den Mittelteil 11 miteinander. Wenn der Schwingungsdämpfer zwei Deckplatten 20 umfasst, befinden sich diese zwei Deckplatten 20 jeweils auf einer axialen Seite des Speichenfedertilgers 10, sodass sich der Speichenfedertilger 10 in axialer Richtung zwischen den zwei Deckplatten 20 befindet. Jedes erste Befestigungselement 50 kann nun in axialer Richtung zugleich durch die zwei Deckplatten 20 und den Mittelteil 11 hindurchgehen. Jede Deckplatte 20 ist in axialer Richtung von den Speichenfedern 12 und dem Außenringteil 13 des Speichenfedertilgers 10 beabstandet, und bei der Drehung relativ zu dem Mittelteil 11 dreht sich der Außenringteil 13 auch synchron relativ zu jeder Deckplatte 20.

Entsprechend umfasst der Schwingungsdämpfer eine oder zwei Membranfedern 30. Bei einem Schwingungsdämpfer ist die Anzahl von Membranfedern 30 mit der Anzahl von Deckplatten 20 identisch, und jede Membranfeder 30 korrespondiert mit einer entsprechenden Deckplatte 20. Jede Membranfeder 30 ist ebenfalls eine um die Mittelachse herum gebildete, etwa kreisringförmige Komponente und ist im Wesentlichen koaxial mit dem Speichenfedertilger 10 und der Deckplatte 20 angeordnet. Jede Membranfeder 30 ist in axialer Richtung in einem vorkomprimierten Zustand zwischen der entsprechenden Deckplatte 20 und dem Außenringteil 13 daran anliegend angeordnet und drückt dadurch in axialer Richtung die einander gegenüberliegenden axialen Seitenflächen der Deckplatte 20 und des Außenringteils 13 zusammen.

Jede Membranfeder 30 stößt relativ drehbar an mindestens eine der beiden Komponenten Deckplatte 20 und Außenringteil 13 an, d. h. kommt nicht fest mit der mindestens einen Komponente in Kontakt. Wenn sich also der Außenringteil 13 des Speichenfedertilgers 10 relativ zum Mittelteil 11 dreht oder ein Trend hin zu einer relativen Drehung besteht, kann sich die Membranfeder 30 relativ zu der nicht fest kontaktierten Komponente der Deckplatte 20 und des Außenringteils 13 gleitend drehen oder es besteht ein Trend hin zu einer relativen Drehung (d. h. Reibungskontakt), wodurch eine die Drehung behindernde Reibungskraft auf den entsprechenden Kontaktflächen erzeugt wird, um eine zusätzliche Reibungsdämpfung für den Schwingungsdämpfer bereitzustellen.

Vorzugsweise kann die Membranfeder 30 fest mit einer der beiden Komponenten Deckplatte 20 und Außenringteil 13 verbunden sein und relativ drehbar mit der anderen in Kontakt kommen. Insbesondere kann die Membranfeder 30 vorzugsweise fest mit dem Außenringteil 13 verbunden sein und relativ drehbar mit der Deckplatte 20 in Kontakt kommen. Durch die feste Verbindung der Membranfeder 30 mit dem Außenringteil 13 wird daher das Positionieren bei der Montage ermöglicht. Der Schwingungsdämpfer kann nun ferner ein oder mehrere zweite Befestigungselemente 60, wie z. B. Nieten, Schrauben oder Bolzen, zur festen Verbindung der Membranfeder 30 mit dem Außenringteil 13 umfassen. Diese zweiten Befestigungselemente 60 können in Umfangsrichtung voneinander beabstandet, insbesondere gleichmäßig voneinander beabstandet, angeordnet sein. Jedes zweite Befestigungselement 60 kann in axialer Richtung durch die Membranfeder 30 und den Außenringteil 13 hindurchgehen und dadurch die Membranfeder 30 und den Außenringteil 13 miteinander sichern. Wenn zwei Membranfedern 30 jeweils auf einer axialen Seite des Außenringteils 13 vorliegen, kann jedes zweite Befestigungselement 60 in axialer Richtung zugleich durch die zwei Membranfedern 30 und den Außenringteil 13 hindurchgehen. Alternativ können die Membranfedern 30 auch fest mit der Deckplatte 20 verbunden sein und relativ drehbar mit dem Außenringteil 13 in Kontakt kommen.

Der drehbare Kontakt der Membranfedern 30 mit der Deckplatte 20 und/oder dem Außenringteil 13 kann ein direkter oder indirekter Kontakt sein. Vorzugsweise kann der Schwingungsdämpfer Reibungsbeläge 40 umfassen. Jeder Reibungsbelag 40 ist ebenfalls eine um die Mittelachse herum gebildete, etwa kreisringförmige Komponente und erstreckt sich im Wesentlichen in einer Ebene senkrecht zur Mittelachse. Jeder Reibungsbelag 40 ist ebenfalls im Wesentlichen koaxial mit dem Speichenfedertilger 10, der Deckplatte 20 und der Membranfeder 30 angeordnet und zwischen der entsprechenden Membranfeder 30 und der entsprechenden Reibkontaktfläche eingeklemmt. Wenn beispielsweise, wie in Figur 3 gezeigt, die Membranfeder 30 fest mit dem Außenringteil 13 verbunden ist und relativ drehbar mit der Deckplatte 20 in Kontakt kommt, kommt jede Membranfeder 30 über den entsprechenden Reibungsbelag 40 in indirekten Kontakt mit der entsprechenden Deckplatte 20.

Wie in der vergrößerten Ansicht rechts in Figur 3 gezeigt, kann der Reibungsbelag 40 vorzugsweise einen L-förmigen Querschnitt in einem Schnitt durch die Mittelachse aufweisen. Konkret kann der Reibungsbelag 40 einen axialen Abschnitt 41 und einen radialen Abschnitt 42 umfassen. Der axiale Abschnitt 41 ist ein sich im Wesentlichen in axialer Richtung erstreckender, kreiszylindrischer Abschnitt, der an der radiale Außenseite der Deckplatte 20 anliegt. Der radiale Abschnitt 42 ist ein sich im Wesentlichen in radialer Richtung erstreckender, kreisringförmiger und plattenförmiger Abschnitt, der sich ausgehend vom dem Speichenfedertilger 10 zugewandten axialen Ende des axialen Abschnitts 41 in radialer Richtung nach innen erstreckt und an einer dem Speichenfedertilger 10 zugewandte Seitenfläche der Deckplatte 20 anliegt. Durch den Formschluss kann die Positionierungsbeziehung dieser Reibungsbeläge 40 relativ zur Deckplatte 20 in der Ebene senkrecht zur Mittelachse ermöglicht werden.

Wie in Figur 3 gezeigt, kann jede Deckplatte 20 vorzugsweise einen radialen Außenabschnitt 21 und einen radialen Innenabschnitt 22 umfassen. Sowohl der radiale Außenabschnitt 21 als auch der radiale Innenabschnitt 22 sind um die Mittelachse herum gebildete, ringförmige Abschnitte. Dabei befindet sich der radiale Außenabschnitt 21 koaxial radial außerhalb des radialen Innenabschnitts 22. Der radiale Außenabschnitt 21 ist in axialer Richtung relativ zu dem radialen Innenabschnitt 22 versetzt, sodass der radiale Außenabschnitt 21 in axialer Richtung von dem Speichenfedertilger 10 beabstandet ist und der radiale Innenabschnitt 22 in axialer Richtung an dem Mittelteil 11 anliegt. Dadurch kann zwischen dem radialen Außenabschnitt 21 und dem Außenringkörper 13 die Membranfeder 30 montiert sein, und die Deckplatte 20 kann durch den radialen Innenabschnitt 22 fest mit dem Mittelteil 11 des Speichenfedertilgers 10 verbunden sein (während die ersten Befestigungselemente 50 an dem radialen Innenabschnitt 22 montiert sind), und die Reibungsbeläge 40 (falls vorhanden) können am radialen Außenrand des radialen Außenabschnitts 21 angeordnet sein.

Jede Deckplatte 20 kann zudem ferner einen Übergangsabschnitt 23 umfassen, der sich in radialer Richtung zwischen dem radialen Außenabschnitt 21 und dem radialen Innenabschnitt 22 befindet. Der radiale Außenabschnitt 21 und der radiale Innenabschnitt 22 können sich jeweils in einer Ebene erstrecken, die im Wesentlichen senkrecht zur Mittelachse steht, und der Übergangsabschnitt 23 kann sich schräg zu dem radialen Außenabschnitt 21 und dem radialen Innenabschnitt 22 erstrecken, um dadurch die beiden zueinander versetzten Abschnitte miteinander zu verbinden.

Vorzugsweise kann der Außendurchmesser des radialen Außenabschnitts 21 kleiner sein als der Außendurchmesser des Außenringteils 13, und der an dem radialen Außenabschnitt 21 anliegende Bereich der entsprechenden Membranfeder 30 befindet sich radial innerhalb des an dem Außenringteil 13 anliegenden Bereichs der Membranfeder 30. Dies erleichtert dadurch die Montage der Membranfeder 30.

In der erfindungsgemäßen Ausführungsform kann der Schwingungsdämpfer nur auf einer axialen Seite mit der Deckplatte 20 und der entsprechenden Membranfeder 30 versehen sein und kann auch auf beiden axialen Seiten jeweils mit der Deckplatte 20 und der entsprechenden Membranfeder 30 versehen sein. Es ist jedoch die Lösung vorzugsweise, dass auf beiden axialen Seiten des Speichenfedertilgers 10 jeweils zwei Deckplatten 20 und zwei entsprechende Membranfedern 30 angeordnet sind. Dies liegt daran, dass die beiden so angeordneten Membranfedern 30 eine federnde Kraft auf beiden axialen Seiten des Speichenfedertilgers 10 gegenüberliegend ausüben können, was zu einem relativ ausgeglichenen axialen kraftbeaufschlagten Zustand des Speichenfedertilgers 10 führt, wodurch das Risiko einer Verformung des Speichenfedertilgers 10 zu einer axialen Seite hin verringert wird, und insbesondere verhindert werden kann, dass der vorkomprimierte Zustand der Membranfedern 30 durch die plastische Verformung des Außenringteils 13 des Speichenfedertilgers 10 zu einer axialen Seite hin aufgehoben wird. Aus demselben Grund können die zwei Deckplatten 20 vorzugsweise die gleiche Form und Abmessung aufweisen und bezüglich des Speichenfedertilgers 10 symmetrisch angeordnet sein, und die beiden Membranfedern 30 können vorzugsweise auch die gleiche Form und Abmessung aufweisen und bezüglich des Speichenfedertilgers 10 symmetrisch angeordnet sein.

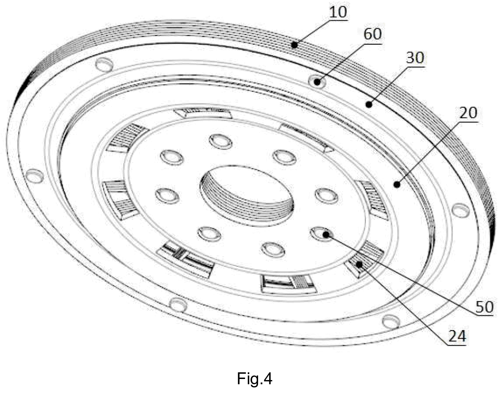

Figur 4 zeigt eine ausgehend von der in den Figuren 1 bis 3 gezeigten Ausführungsform verbesserte Ausführungsform. Der in Figur 4 gezeigte Schwingungsdämpfer unterscheidet sich von dem in den Figuren 1 bis 3 gezeigten Schwingungsdämpfer dadurch, dass die Deckplatte 20 ein oder mehrere Fensterlöcher 24 umfassen kann. Jedes Fensterloch 24 erstreckt sich in axialer Richtung durch die Deckplatte 20 hindurch, sodass Verschmutzungen innerhalb des Schwingungsdämpfers unter Fliehkrafteinwirkung über das Fensterloch 24 abgeleitet werden können. Die Fensterlöcher 24 sind an einem mit dem Speichenfedertilger 10 kontaktfreien Abschnitt der Deckplatte 20 gebildet, z. B. am Übergangsabschnitt 23. Sind mehrere Fensterlöcher 24 vorhanden, so können diese Fensterlöcher 24 vorzugsweise in Umfangsrichtung voneinander beabstandet, insbesondere gleichmäßig, verteilt sein.

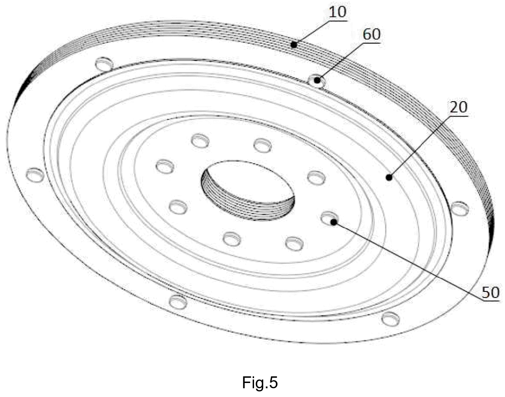

In der in den Figuren 1 bis 3 gezeigten Ausführungsform bzw. der in Figur 4 gezeigten verbesserten Ausführungsform wird über die Membranfeder 30 der indirekte Reibkontakt zwischen der Deckplatte 20 und dem Außenringteil 13 hergestellt, wobei die für die Kontaktfläche erforderliche Anpresskraft durch die elastische Kompression der Membranfeder 30 bereitgestellt wird. Alternativ kann die zur Erzeugung der Reibungskraft zwischen der Deckplatte 20 und dem Außenringteil 13 erforderliche Anpresskraft auch auf andere Weise erreicht werden. In der in den Figuren 5 bis 6 gezeigten alternativen Ausführungsform ist zwischen der Deckplatte 20 und dem Außenringteil 13 keine Membranfeder 30 angeordnet, wobei die Deckplatte 20 aus einem elastischen Material hergestellt ist, sodass sich die Deckplatte 20 selbst elastisch verformen und somit ihren Außenrand an dem Außenringteil 13 anpressen kann. Das elastische Material zur Herstellung einer solchen Deckplatte 20 soll ein Material mit sowohl der Festigkeit als auch der Elastizität sein, vorzugsweise Federstahl.

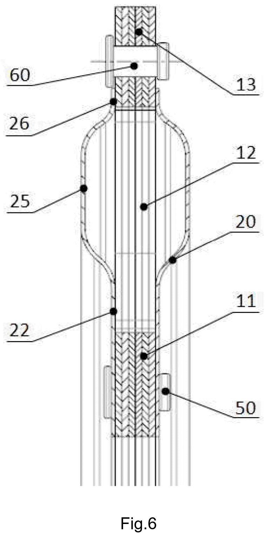

Vorzugsweise kann mit einer Wölbungsstruktur die elastische Verformungskapazität der Deckplatte 20 erhöht werden, wodurch sichergestellt wird, dass eine ausreichende Anpresskraft an dem Außenrand erzeugt wird. Konkret kann die Deckplatte 20, wie in Figur 6 gezeigt, einen radialen Innenabschnitt 22, einen Wölbungsabschnitt 25 und einen Randabschnitt 26 umfassen, die koaxial zueinander angeordnet sind. Dabei weist der radiale Innenabschnitt 22 eine im Wesentlichen gleiche Konstruktion auf wie der radiale Innenabschnitt 22 in der in den Figuren 1 bis 3 gezeigten Ausführungsform und stößt ebenfalls an dem Mittelteil 11 an und ist daran fixiert. Der ringförmige Randabschnitt 26 umgibt als Außenrand der Deckplatte 20 koaxial radial außen den radialen Innenabschnitt 22 und ist in radialer Richtung von dem radialen Innenabschnitt 22 beabstandet. Der Wölbungsabschnitt 25 ist ebenfalls ein ringförmiger Abschnitt um die Mittelachse und ist zwischen dem radialen Innenabschnitt 22 und dem Randabschnitt 26 damit verbunden angeordnet. Der Randabschnitt 26 stößt relativ drehbar direkt oder indirekt (z. B. über einen Reibungsbelag) an den Außenringteil 13 an. Der Wölbungsabschnitt 25 ist etwa axial in einer Richtung weg vom Speichenfedertilger 10 gewölbt und kommt dadurch nicht in Kontakt mit dem Speichenfedertilger 10. Wenn die Deckplatte 20 mit dem Speichenfedertilger 10 zusammen montiert ist, verformt sich der Wölbungsabschnitt 25 elastisch in einer Richtung weg vom Speichenfedertilger 10, wodurch eine federnde Kraft erzeugt wird, durch welche der Randabschnitt 26 an den Außenringteil 13 angepresst wird. Die Konstruktion der Deckplatte 20 in der in den Figuren 5 bis 6 gezeigten Ausführungsform entspricht etwa der Konstruktion, die durch die Integration der Deckplatte und der Membranfeder in der in den Figuren 1 bis 3 gezeigten Ausführungsform gebildet wird. Zusätzlich zu den vorstehend explizit beschriebenen Unterschieden entsprechen die übrigen strukturellen Merkmale der beiden Ausführungsformen im Wesentlichen einander und werden hier nicht wiederholt.

Der erfindungsgemäße Schwingungsdämpfer kann durch die Deckplatte eine zusätzliche Dämpfung für den Speichenfedertilger bereitstellen. Die Deckplatte kann zugleich die axiale Position des Außenringkörpers des Speichenfedertilgers einschränken, wodurch das Risiko einer axialen Verformung des Speichenfedertilgers verringert wird. Dieser Schwingungsdämpfer weist eine einfache Konstruktion auf und ist leicht herzustellen und zu montieren, und kann die Fertigungskosten effektiv reduzieren und den Einbauraum einsparen. Außerdem kann bei dem fertigen Schwingungsdämpfer ab Werk die Reibungskraft ferner durch Ändern der federnden Kraft der Membranfeder oder der Montagehöhe bequem angepasst werden, um dadurch eine geeignete Dämpfungswirkung zu erzielen.

Obwohl mögliche Ausführungsformen in der vorstehenden Beschreibung beispielhaft beschrieben sind, versteht es sich, dass durch die Kombination aller bekannten und weiterhin für den Fachmann ohne weiteres denkbaren technischen Merkmale und Ausführungsformen noch eine große Anzahl von Ausführungsvarianten existiert. Zudem versteht es sich, dass die beispielhaften Ausführungsformen nur als Beispiele dienen und dass solche Ausführungsformen den Schutzumfang, die Anwendung und den Aufbau der vorliegenden Erfindung in keiner Weise einschränken. Die vorstehende Beschreibung dient vielmehr dazu, eine technische Anleitung für die Umsetzung der mindestens einen beispielhaften Ausführungsform für den Fachmann bereitzustellen, wobei verschiedene Modifikationen vorgenommen werden können, insbesondere im Hinblick auf die funktionalen und strukturellen Aspekte der beschriebenen Komponenten, solange sie nicht vom Schutzumfang der Ansprüche abweichen.

### Bezugszeichenliste

10 Speichenfedertilger
11 Mittelteil
12 Speichenfeder
13 Außenringteil
20 Deckplatte
21 radialer Außenabschnitt
22 radialer Innenabschnitt
23 Übergangsabschnitt
24 Fensterloch
25 Wölbungsabschnitt
26 Randabschnitt
30 Membranfeder
40 Reibungsbelag
41 axialer Abschnitt
42 radialer Abschnitt
50 erstes Befestigungselement
60 zweites Befestigungselement

## Patentansprüche

1. Schwingungsdämpfer, umfassend einen Speichenfedertilger (10), wobei der Speichenfedertilger (10) einen Mittelteil (11), mehrere Speichenfedern (12) und einen Außenringteil (13) umfasst, wobei der Außenringteil (13) radial außen den Mittelteil (11) koaxial umgibt, wobei die mehreren Speichenfedern (12) jeweils in radialer Richtung zwischen dem Außenringteil (13) und dem Mittelteil (11) damit verbunden angeordnet und in Umfangsrichtung voneinander beabstandet verteilt sind, wobei sich die mehreren Speichenfedern (12) elastisch verformen können und dadurch eine Drehung des Außenringteils (13) relativ zu dem Mittelteil (11) zulassen,
**dadurch gekennzeichnet, dass** der Schwingungsdämpfer ferner eine Deckplatte (20) umfasst, wobei die Deckplatte (20) an der axialen Seite des Mittelteils (11) fixiert ist und relativ drehbar direkt oder indirekt an dem Außenringteil (13) anliegt, sodass bei der Drehung des Außenringteils (13) relativ zu dem Mittelteil (11) die Deckplatte (20) mit dem Außenringteil (13) in direkten oder indirekten Reibungskontakt kommen kann.

2. Schwingungsdämpfer nach Anspruch 1, **dadurch gekennzeichnet, dass** der Schwingungsdämpfer ferner eine Membranfeder (30) umfasst, wobei die Membranfeder (30) zwischen der Deckplatte (20) und dem Außenringteil (13) daran anliegend angeordnet ist und relativ drehbar an mindestens einer der beiden Komponenten Deckplatte (20) und Außenringteil (13) anliegt.

3. Schwingungsdämpfer nach Anspruch 2, **dadurch gekennzeichnet, dass** die Membranfeder (30) fest mit einer der beiden Komponenten Deckplatte (20) und Außenringteil (13) verbunden ist und relativ drehbar mit der anderen in Kontakt kommt.

4. Schwingungsdämpfer nach Anspruch 3, **dadurch gekennzeichnet, dass** die Membranfeder (30) fest mit dem Außenringteil (13) verbunden ist und relativ drehbar mit der Deckplatte (20) in Kontakt kommt.

5. Schwingungsdämpfer nach Anspruch 4, **dadurch gekennzeichnet, dass** der Schwingungsdämpfer ferner einen Reibungsbelag (40) umfasst, wobei die Membranfeder (30) über den Reibungsbelag (40) mit der Deckplatte (20) in indirekten Kontakt kommt.

6. Schwingungsdämpfer nach Anspruch 5, **dadurch gekennzeichnet, dass** der Reibungsbelag (40) einen axialen Abschnitt (41) und einen radialen Abschnitt (42) umfasst, wobei der axiale Abschnitt (41) an der radiale Außenseite der Deckplatte (20) anliegt, und der radiale Abschnitt (42) sich ausgehend vom axialen Ende des axialen Abschnitts (41) in radialer Richtung nach innen erstreckt und an einer dem Speichenfedertilger (10) zugewandte Seitenfläche der Deckplatte (20) anliegt.

7. Schwingungsdämpfer nach Anspruch 4, **dadurch gekennzeichnet, dass** der Schwingungsdämpfer ferner ein oder mehrere erste Befestigungselemente (50) umfasst, wobei jedes erste Befestigungselement (50) in axialer Richtung durch die Deckplatte (20) und den Mittelteil (11) hindurchgeht und dadurch die Deckplatte (20) und den Mittelteil (11) miteinander sichert; und/oder dass der Schwingungsdämpfer ferner ein oder mehrere zweite Befestigungselemente (60) umfasst, wobei jedes zweite Befestigungselement (60) in axialer Richtung durch die Membranfeder (30) und den Außenringteil (13) hindurchgeht und dadurch die Membranfeder (30) und den Außenringteil (13) miteinander sichert.

8. Schwingungsdämpfer nach Anspruch 1, **dadurch gekennzeichnet, dass** die Deckplatte (20) aus einem elastischen Material hergestellt ist, sodass die Deckplatte (20) den Außenrand durch elastische Verformung an den Außenringteil (13) anpresst.

9. Schwingungsdämpfer nach Anspruch 8, **dadurch gekennzeichnet, dass** die Deckplatte (20) einen radialen Innenabschnitt (22), einen Wölbungsabschnitt (25) und einen Randabschnitt (26) umfasst, wobei der radiale Innenabschnitt (22) an dem Mittelteil (11) fixiert ist, der Randabschnitt (26) radial außen den radialen Innenabschnitt (22) koaxial umgibt, und der Wölbungsabschnitt (25) zwischen dem radialen Innenabschnitt (22) und dem Randabschnitt (26) damit verbunden angeordnet und von dem Speichenfedertilger (10) weg gewölbt ist, sodass der Randabschnitt (26) an den Außenringteil (13) angepresst ist.

10. Schwingungsdämpfer nach Anspruch 1, **dadurch gekennzeichnet, dass** die Deckplatte (20) ein oder mehrere durchgehende Fensterlöcher (24) zum Ableiten von Verschmutzungen umfasst.

11. Schwingungsdämpfer nach einem der Ansprüche 1 bis 10, **dadurch gekennzeichnet, dass** der Schwingungsdämpfer zwei Deckplatten (20) umfasst, wobei sich die zwei Deckplatten (20) jeweils auf einer axialen Seite des Speichenfedertilgers (10) befinden und jeweils relativ drehbar direkt oder indirekt an dem Außenringteil (13) anliegen.
